# EUROPEAN PATENT APPLICATION

(11) **EP 1 111 272 A2**
(43) Date of publication of application: **27.06.2001**
(21) Application number: 00307585.0
(22) Date of filing: 04.09.2000
(51) Int. Cl.: F16G 13/06

(54) **A chain**

(30) Priority: 24.11.1999 GB 9927626
(71) Applicant: RENOLD Plc, Wythenshawe, Manchester M33 5WL (GB)
(72) Inventor: Wilson, Brian Thomas, Ponteland, Newcastle upon Tyne NE20 9LQ (GB)
(74) Representative: Every, David Aidan

(57) **Abstract**

A chain assembly has a plurality of adjacent links (1) that are moulded around cylindrical bushes (3), the exterior surfaces of the bushes having been pre-treated with a release agent. The links (1) are then interconnected by inserting a U-shaped connecting member (2) into the respective bushes (3) of the adjacent links (1) so that they engages therewith in a friction fit. The strength of the friction fit in a torsional direction is greater than that provided by the engagement of the bushes (3) and links (1) so that that when the adjacent links (1) are articulated relative to one another the release agent fractures so as to permit relative rotation of the bush (3) and the link (1).

## Description

The present invention relates to a transmission or transportation chain assembly and a method for manufacturing such a chain assembly.

A conventional roller and bush chain assembly for transmission or transportation purposes has pairs of opposed link inner link plates that are interconnected by pairs of opposed outer link plates and pins about which the inner link plates articulate. Each pin is fixed at its ends to a respective outer link plate but is pivotal relative to the inner link plates within a bush that extends between opposed apertures in the inner link plates.

There is a consistent requirement in the chain manufacturing industry to produce such chains at low cost and with low maintenance or repair requirements. This has resulted in a move to manufacturing at least some chain components from plastics or polymer-based materials which have better wear-resistant properties.

It is an object of the present invention to provide for a chain that can be produced and assembled at relatively low cost whilst still retaining adequate performance.

According to a first aspect of the present invention there is provided a method for manufacturing a chain assembly having adjacent links, the method comprising moulding each link around at least one cylindrical bush, so that the link is engaged with said bush, interconnecting adjacent links by inserting a connecting member into a respective bush of adjacent links so that it engages therewith in a friction fit such that when the adjacent links are articulated relative to one another the engagement between the link and bush is released so as to permit relative rotation of the bush and the link.

The method provides for a simple manufacturing and assembly process without compromising the chain performance.

The link is preferably moulded by an injection moulding process.

In a preferred embodiment the or each bush is constructed from a metallic material and the link is of a polymer material.

The bush ideally extends along the full width of link so as to provide good wear-resistant performance.

The release agent conveniently provides a bond between the bush and the link, the bond being torsionally weaker than the friction fit connection between the bush and connection member.

According to a second aspect of the present invention there is provided a chain assembly comprising a plurality of chain links interconnected by at least one connection member and manufactured according to the method defined above.

According to a third aspect of the present invention there is provided a chain assembly comprising a plurality of chain links each having at least one bush rotatably disposed therein, the bushes of adjacent chain links being interconnected by a connection member that is engaged in each bush in a friction fit.

The connection member is preferably a staple of U-shape and of metallic construction.

The link is preferably manufactured from a polymer-based material.

Each link may have two apertures in each of which there is a said bush.

The bush preferably extends across full width of link

According to a fourth aspect of the present invention there is provided a kit of parts for a chain assembly comprising a plurality of chain links each having at least one bush therein and connected thereto by a frangible bond and at least one connection member for engagement with the bush in a friction fit.

A specific embodiment of the present invention will now be described, by way of example only, with reference to the accompanying drawings in which:
Figure 1 is an exploded perspective view of a chain assembly of the present invention; and
Figure 2 is a perspective assembled view of the chain assembly of figure 1.

Referring now to the drawings, the exemplary chain assembly comprises a plurality of identical chain links 1 (only two shown) each of which are integrally moulded from a polymer material such as nylon. The links 1 are interconnected by a combination of U-shaped staples 2 and cylindrical bushes 3 in such a way (described in detail later) that they are able to articulate relative to one another.

Each chain link 1 is manufactured by injection moulding around two parallel spaced metallic cylindrical bushes 3, the outer surfaces 4 of which have been precoated with a suitable adhesive release agent. The moulded link 1 has spaced outer portions 5 that are integrally connected by transverse, parallel, spaced cylindrical portions 6. The space 7 between the cylindrical portions 6 is designed to receive, in use, a tooth (not shown in the appended figures) of a drive mechanism such as a sprocket. The length of each bush 3 is substantially coterminous with the width of the links 1. After the moulding process the bushes 3 are held fast to the link 1 by the release agent.

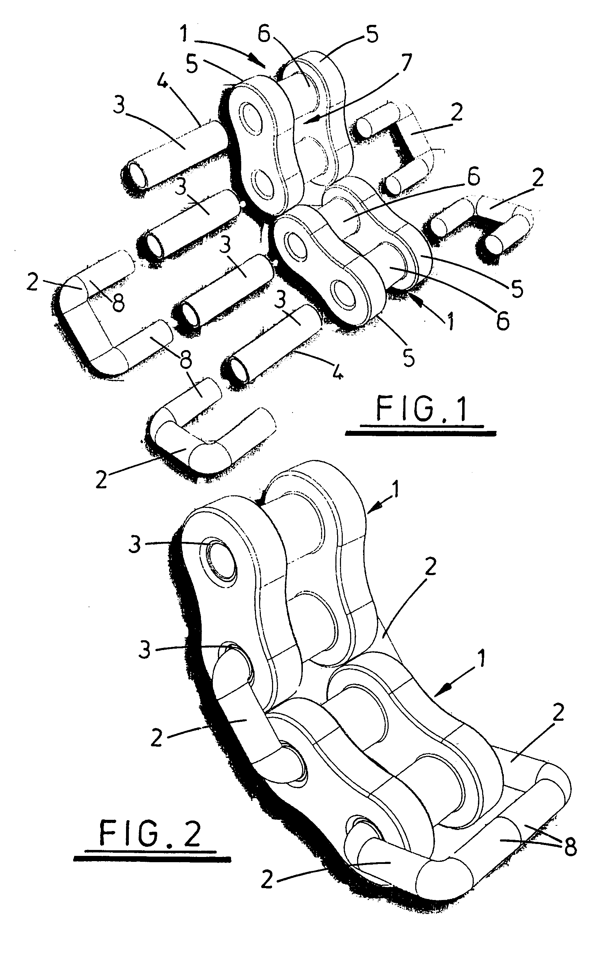

The U-shaped staples 2 are manufactured from, typically, stainless steel and the ends 8 of their limbs are inserted, on each side, into the adjacent cylindrical bushes 3 of neighbouring links 1 in a friction fit such as a toleranced interference fit. When the staples 2 are fully inserted the ends 8 of the limbs are brought into abutment as can be seen in figure 2 where a link has been removed for clarity. The friction engagement of the staples 2 with the bushes 3 is of greater torsional strength than that provided by the bond of the release agent.

Once assembled in the manner described above the adjacent links 1 are articulated relative to one another. Since the bushes 3 are held against rotation by their frictional engagement with the staples 2, this has the effect of breaking the release agent bond between the bushes 3 and the link 1 thereby permitting relative rotation of the two components. The chain of the present invention is then ready for use in a conventional manner.

It will be appreciated that this arrangement provides for a simple manufacturing and assembly process.

The cylindrical bushes extend across the entire width of the link and thus provide for improved wear resistance. The link is ideally manufactured from any sort of wear-resistant mouldable polymer or plastics-based material. However, the same chain assembly configuration may be constructed with metallic links and therefore it is to be appreciated that other forms of manufacture may be used to produce the chain assembly shown in the drawings.

It will be appreciated that numerous modifications to the above described design may be made without departing from the scope of the invention as defined in the appended claims. For example, it is not essential that the bush is treated with a release agent. The shrinkage of the moulded link 1 can be controlled or predicted such that the bush is initially frictionally gripped by the link but is released once the staples are inserted and the bushes and links are articulated relative to one another as before. It will also be understood that the link may be moulded around the bushes but that the two components could be assembled separately. Finally, the links of opposed stapes 2 may not be in abutment when fully inserted.

## Claims

1. A method for manufacturing a chain assembly having adjacent links, the method comprising moulding each link around at least one cylindrical bush, so that the link is engaged with said bush, interconnecting adjacent links by inserting a connecting member into a respective bush of adjacent links so that it engages therewith in a friction fit such that when the adjacent links are articulated relative to one another the engagement between the link and bush is released so as to permit relative rotation of the bush and the link.

2. A method according to claim 1, wherein the link is moulded by an injection moulding process.

3. A method according to claim 1 or 2, wherein the exterior surface of the bush is pre-treated with a release agent so that the link is bonded to the or each bush by the release agent and the engagement is released by virtue of fracture of the release agent.

4. A method according to claim 1, 2 or 3, wherein the or each bush is constructed from a metallic material.

5. A method according to any preceding claim wherein the links are moulded from a polymer material.

6. A method according to any preceding claim, wherein the or each bush extends along full width of link.

7. A method according to any preceding claim, wherein the engagement between each bush and the link is being torsionally weaker than the friction fit connection between the bush and connection member.

8. A chain assembly comprising a plurality of chain links interconnected by at least one connection member and manufactured according to the method defined above.

9. A chain assembly comprising a plurality of chain links each having at least one bush rotatably disposed therein, the bushes of adjacent chain links being interconnected by a connection member that is engaged in each bush in a friction fit.

10. A chain assembly according to claim 8 or 9, wherein the connection member is a staple of U-shape.

11. A chain assembly according to claim 10, wherein the staple is of metallic construction.

12. A chain assembly according to claim 10 or 11, where the link is manufactured from a polymer-based material.

13. A chain assembly according to any one of claims 8 to 12, wherein each link has two apertures in each of which there is a said bush.

14. A kit of parts for a chain assembly comprising a plurality of chain links each having at least one bush therein and connected thereto by a frangible engagement and at least one connection member for engagement with the bush in a friction fit.

15. A method for manufacturing a chain assembly substantially as hereinbefore described with reference to the accompanying drawings.

16. A chain assembly substantially as hereinbefore described substantially as hereinbefore described with reference to the accompanying drawings.
